# EUROPEAN PATENT SPECIFICATION

(11) **EP 3 125 487 B1**
(45) Date of publication and mention of the grant of the patent: **27.02.2019**
(21) Application number: 14887584.2
(22) Date of filing: 18.08.2014
(51) Int. Cl.: H04L 29/06

(54) **IPV6 NETWORK PARAMETER PROCESSING METHOD, DEVICE, SYSTEM AND AAA SERVER**
IPV6-NETZWERK-PARAMETERVERARBEITUNGSVERFAHREN, VORRICHTUNG, SYSTEM UND AAA-SERVER
PROCÉDÉ, DISPOSITIF, SYSTÈME DE TRAITEMENT DE PARAMÈTRES DE RÉSEAU IPV6, ET SERVEUR AAA

(30) Priority: 28.03.2014 CN 201410123995
(43) Date of publication of application: 01.02.2017
(73) Proprietor: ZTE Corporation, Shenzhen, Guangdong 518057 (CN)
(72) Inventor: MENG, Wei, Shenzhen Guangdong 518057 (CN); WANG, Cui, Shenzhen Guangdong 518057 (CN); CAI, Lei, Shenzhen Guangdong 518057 (CN)
(74) Representative: Novagraaf Technologies
(86) International application number: PCT/CN2014/084669
(87) International publication number: WO 2015/143823

(56) References cited:
- EP-A1- 2 675 117
- CN-A- 1 744 597
- CN-A- 101 697 550
- CN-A- 101 741 924
- US-A1- 2009 232 022

## Description

### Technical Field

The present disclosure relates to the field of communication, and in particular to a method, device and system for processing an Internet Protocol version 6 (IPv6) network parameter, an Authentication Authorization and Accounting (AAA) server, a Remote Authentication Dial-In User Service (RADIUS) (or called remote user dial-in authentication) client and a Broadband Network Gateway (BNG).

### Background

Along with rapid development of modern technologies, the Internet has been widely applied to each field. Internet Protocol version 4 (IPv4) adopted at the present stage is not able to meet requirements of development of times. IPv4 addresses defined by the IPv4 have been completely allocated, but many countries and regions are still confronted with the problem of IPv4 address shortage. It is an inevitable trend to replace IPv4 with a new-generation address protocol IPv6, but transition from IPv4 to IPv6 will be a long and gradual process. In such a process, many IPv6 transition technology types emerge, mainly including: technology types such as Network Address Translation IPv4-IPv4 (NAT44), NAT IPv4-IPv4-IPv4 (NAT444), Dual-Stack Lite (DS-Lite), Light weight 4over6, Mapping of Address and Port with Encapsulation (MAP), NAT IPv6-IPv4 (NAT64), Public 4over6 and IV-VI (Roman numerals 4-6, representative of IPv4-IPv6 stateless translation) (IVI).

In a related art, deployment of an IPv6 technology in a broadband network is implemented on the basis of configuration of Customer Premise Equipment (CPE) (usually equipment such as a home gateway, a Modem and the like) and a BNG. For example, an operator provides CPE supporting a DS-Lite technology for a user A and makes the user A access BNG equipment supporting the DS-Lite technology; and after a period of time, a operator network is upgraded, the BNG equipment supports Lightweight 4over6 technology in the operator network, and then the operator network is required to provide CPE supporting the Lightweight 4over6 technology for a new user B.

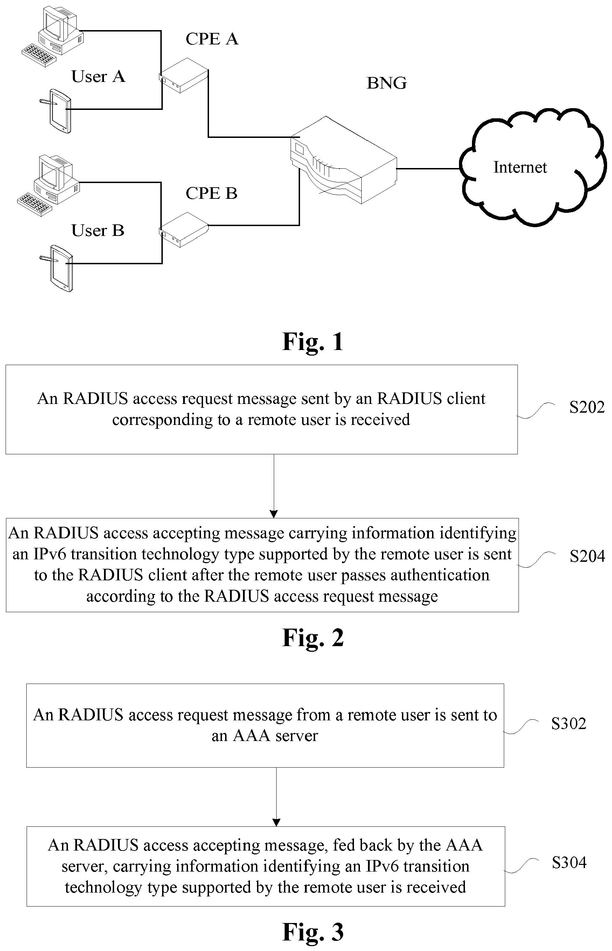

Fig. 1 is a diagram of a scenario supporting multiple IPv6 transition technology types in the related art, and as shown in Fig. 1, a operator network is required to support a Lightweight 4over6 technology, and for the user A, smooth upgrading to the Lightweight 4over6 technology is required. However, in the related art, both a CPE and a BNG are manually configured to implement configuration of the current IPv6 transition technology, and when the CPE is required to be smoothly upgraded to support another transition technology, it is necessary to perform lots of configurations to the CPE of the user A and even upgrade software and hardware of the CPE, which greatly increases operation cost. In addition, when the BNG of the operator network simultaneously supports two or more transition technologies, the BNG in the related art is required to be configured to know which transition technology suitable to be set for each piece of CPE, so that massive configurations are on the BNG, which makes it difficult to operate and manage.

Therefore, there exist the problems of complexity in manual configuration, configuration inflexibility and high cost for deployment of an IPv6 transition technology in a broadband network in the related art.

### Summary

The present disclosure provides a method, device and system for processing an IPv6 network parameter, an AAA server, an RADIUS client and a BNG, so as to at least solve the problems of complexity in manual configuration, configuration inflexibility and high cost for deployment of an IPv6 transition technology in a broadband network in the related art.

According to an embodiment of the present disclosure, a method for processing an Internet Protocol version 6 (IPv6) network parameter is provided, including: receiving a Remote Authentication Dial-In User Service (RADIUS) access request message sent by an RADIUS client corresponding to a remote user; and sending an RADIUS access accepting message carrying information identifying an IPv6 transition technology type supported by the remote user to the RADIUS client after the remote user passes authentication according to the RADIUS access request message.

In an example embodiment, sending the RADIUS access accepting message carrying the information identifying the IPv6 transition technology type supported by the remote user to the RADIUS client includes: determining at least one IPv6 transition technology type supported by the remote user; determining at least one Identifier (ID) corresponding to the at least one IPv6 transition technology type; and sending the RADIUS access accepting message encapsulated with the at least one ID to the RADIUS client.

According to another embodiment of the present disclosure, a method for processing an Internet Protocol version 6 (IPv6) network parameter is provided, including: sending a Remote Authentication Dial-In User Service, RADIUS, access request message from a remote user to an Authentication Authorization and Accounting (AAA) server; and receiving an RADIUS access accepting message, fed back by the AAA server, carrying information identifying an IPv6 transition technology type supported by the remote user.

In an example embodiment, after receiving the RADIUS access accepting message, fed back by the AAA server, carrying the information identifying the IPv6 transition technology type supported by the remote user, further including: parsing at least one IPv6 transition technology type corresponding to at least one Identifier (ID) in the RADIUS access accepting message when the IPv6 transition technology type supported by the remote user is identified by an ID; storing a corresponding relationship between the at least one ID and the remote user; and/or, sending the at least one IPv6 transition technology type to the remote user.

According to an embodiment of the present disclosure, a device for processing an Internet Protocol version 6 (IPv6) network parameter is provided, including: a first receiving component, configured to receive an RADIUS access request message sent by an Remote Authentication Dial-In User Service (RADIUS) client corresponding to a remote user; and a first sending component, configured to send an RADIUS access accepting message carrying information identifying an IPv6 transition technology type supported by the remote user to the RADIUS client after the remote user passes authentication according to the RADIUS access request message.

In an example embodiment, the first sending component includes: a first determination element, configured to determine at least one IPv6 transition technology type supported by the remote user; a second determination element, configured to determine at least one Identifier (ID) corresponding to the at least one IPv6 transition technology type; and a sending element, configured to send the RADIUS access accepting message encapsulated with the at least one ID to the RADIUS client.

According to another embodiment of the present disclosure, an Authentication Authorization and Accounting (AAA) server is provided, including any one of the abovementioned devices.

According to an embodiment of the present disclosure, a device for processing an Internet Protocol version 6 (IPv6) network parameter is provided, including: a second sending component, configured to send a Remote Authentication Dial-In User Service (RADIUS) access request message from a remote user to an Authentication Authorization and Accounting (AAA) server; and a second receiving component, configured to receive an RADIUS access accepting message, fed back by the AAA server, carrying information identifying an IPv6 transition technology type supported by the remote user.

In an example embodiment, the device further including: a parsing component, configured to parse at least one IPv6 transition technology type corresponding to at least one Identifier (ID) in the RADIUS access accepting message when the IPv6 transition technology type supported by the remote user is identified by an ID; a storage component, configured to store a corresponding relationship between the at least one ID and the remote user; and/or, a third sending component, configured to send the at least one IPv6 transition technology type to the remote user.

According to another embodiment of the present disclosure, a Remote Authentication Dial-In User Service (RADIUS) client is provided, including any one of the abovementioned devices.

According to another embodiment of the present disclosure, a Broadband Network Gateway (BNG) is provided, including any one of the abovementioned devices.

According to another embodiment of the present disclosure, a system for processing an Internet Protocol version 6 (IPv6) transition technology type is provided, including the abovementioned Authentication Authorization and Accounting (AAA) server and the abovementioned Broadband Network Gateway (BNG).

According to the present disclosure, an RADIUS access request message sent by an RADIUS client corresponding to a remote user is received; and an RADIUS access accepting message carrying information identifying an IPv6 transition technology type supported by the remote user is sent to the RADIUS client after the remote user passes authentication according to the RADIUS access request message, so that the problems of complexity in manual configuration, configuration inflexibility and high cost of an IPv6 transition technology type in the related art are solved, and the effects of extending a configuration manner for the IPv6 transition technology type and implementing unified configuration management of a network on IPv6 transition technology types supported by a user are further achieved.

### Brief Description of the Drawings

The drawings described here are adopted to provide further understanding of the present disclosure, and form a part of the present disclosure. Schematic embodiments of the present disclosure and descriptions thereof are adopted to explain the present disclosure and not intended to form improper limits to the present disclosure. In the drawings:
Fig. 1 is a diagram of a scenario supporting multiple IPv6 transition technology types in the related art;
Fig. 2 is a flowchart of a first method for processing an IPv6 network parameter according to an embodiment of the present disclosure;
Fig. 3 is a flowchart of a second method for processing an IPv6 network parameter according to an embodiment of the present disclosure;
Fig. 4 is a structure block diagram of a first device for processing an IPv6 network parameter according to an embodiment of the present disclosure;
Fig. 5 is an example structure block diagram of the first sending component 44 in the first device for processing the IPv6 network parameter according to an embodiment of the present disclosure;
Fig. 6 is a structure block diagram of an AAA server according to an embodiment of the present disclosure;
Fig. 7 is a structure block diagram of a second device for processing an IPv6 network parameter according to an embodiment of the present disclosure;
Fig. 8 is an example structure block diagram of the second device for processing the IPv6 network parameter according to an embodiment of the present disclosure;
Fig. 9 is a structure diagram of an RADIUS client according to an embodiment of the present disclosure;
Fig. 10 is a structure diagram of a BNG according to an embodiment of the present disclosure;
Fig. 11 is a structure diagram of a system for processing an IPv6 transition technology type according to an embodiment of the present disclosure;
Fig. 12 is a flowchart of RADIUS message interaction according to an embodiment of the present disclosure;
Fig. 13 is a diagram of a format of an RADIUS message according to an embodiment of the present disclosure;
Fig. 14 is a diagram of a format of an RADIUS message with an extended attribute option containing an ID of an IPv6 transition technology type according to an embodiment of the present disclosure;
Fig. 15 is a diagram of a DS-Lite transition technology-based deployment scenario according to a first example embodiment of the present disclosure;
Fig. 16 is a diagram of a deployment scenario based on simultaneous support of the same user to DS-Lite and MAP transition technologies according to a second example embodiment of the present disclosure; and
Fig. 17 is a diagram of a deployment scenario based on support of user 1 to a MAP transition technology and support of user 2 to a Lightweight 4over6 according to a third example embodiment of the present disclosure.

### Detailed Description of the Embodiments

The present disclosure will be described below with reference to the drawings and embodiments in detail. It is important to note that the embodiments in the present disclosure and characteristics in the embodiments may be combined under the condition of no conflicts.

The embodiment provides a method for processing an IPv6 network parameter, Fig. 2 is a flowchart of a first method for processing an IPv6 network parameter according to an embodiment of the present disclosure, and as shown in Fig. 2, the flow includes the following steps:
Step 202: an RADIUS access request message sent by an RADIUS client corresponding to a remote user is received; and
Step 204: an RADIUS access accepting message carrying information identifying an IPv6 transition technology type supported by the remote user is sent to the RADIUS client after the remote user passes authentication according to the RADIUS access request message.

By the steps, for a network server side, the IPv6 transition technology type supported by the remote user is configured in an extending manner of interacting an RADIUS message, so that the problems of complexity in manual configuration, configuration inflexibility and high cost of an IPv6 transition technology type in the related art are solved, and the effects of extending a configuration manner for the IPv6 transition technology type and implementing unified configuration management of a network on IPv6 transition technology types supported by a user are further achieved.

Multiple manners may be adopted to send the RADIUS access accepting message carrying the information identifying the IPv6 transition technology type supported by the remote user to the RADIUS client. For example, a simpler processing manner is to identify at least one IPv6 transition technology type. For example, the at least one IPv6 transition technology type supported by the remote user are determined at first, then at least one ID corresponding to the at least one IPv6 transition technology type is determined, and finally, the RADIUS access accepting message encapsulated with the at least one ID is sent to the RADIUS client.

Fig. 3 is a flowchart of a second method for processing an IPv6 network parameter according to an embodiment of the present disclosure, and as shown in Fig. 3, the flow includes the following steps:
Step 302: an RADIUS access request message from a remote user is sent to an AAA server; and
Step 304: an RADIUS access accepting message, fed back by the AAA server, carrying information identifying an IPv6 transition technology type supported by the remote user is received.

By the steps, for a client side, the IPv6 transition technology type supported by the remote user is acquired in a extending manner of interacting an RADIUS message, so that the problems of complexity in manual configuration, configuration inflexibility and high cost of an IPv6 transition technology type in the related art are solved, and the effects of extending a configuration manner for the IPv6 transition technology type and implementing unified configuration management of a network on IPv6 transition technology types supported by a user are further achieved.

After the RADIUS access accepting message, fed back by the AAA server, carrying the information identifying the IPv6 transition technology type supported by the remote user is received, the following processing may further be performed: at least one IPv6 transition technology type corresponding to at least one ID in the RADIUS access accepting message is parsed at first when the IPv6 transition technology type supported by the remote user is identified by an ID; then a corresponding relationship between at least one ID and a remote user may be stored, so that a client may locally acquire the IPv6 transition technology type supported by the remote user according to the corresponding relationship and store and back up information of the remote user; and/or, the at least one IPv6 transition technology type may also be sent to the remote user for the remote user to smoothly implement a transition to an IPv6 technology.

The embodiment further provides a device for processing an IPv6 network parameter, which is configured to implement the abovementioned embodiment and example implementation mode, and that what has been described will not be elaborated. For example, term "component", used below, may implement a combination of software and/or hardware with a preset function. Although the device described in the following embodiment is preferably implemented with software, implementation with hardware or a combination of software and hardware is also possible and conceivable.

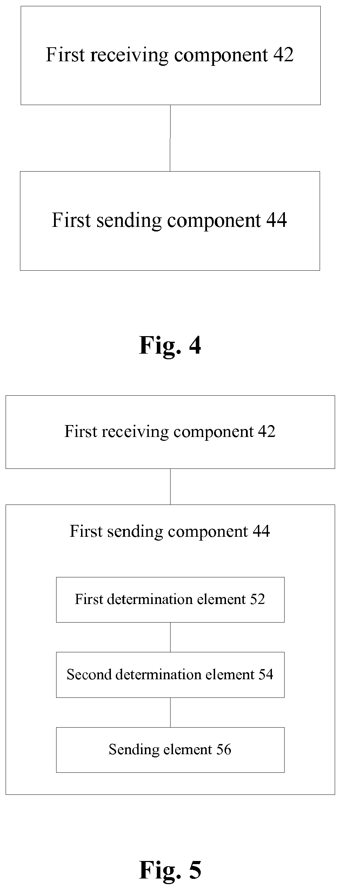

Fig. 4 is a structure block diagram of a first device for processing an IPv6 network parameter according to an embodiment of the present disclosure, and as shown in Fig. 4, the device includes a first receiving component 42 and a first sending component 44. The device will be described below.

The first receiving component 42 is configured to receive an RADIUS access request message sent by an RADIUS client corresponding to a remote user; and the first sending component 44 is connected to the first receiving component 42, and is configured to send an RADIUS access accepting message carrying information identifying an IPv6 transition technology type supported by the remote user to the RADIUS client after the remote user passes authentication according to the RADIUS access request message.

Fig. 5 is an example structure block diagram of the first sending component 44 in the first device for processing the IPv6 network parameter according to an embodiment of the present disclosure, and as shown in Fig. 5, the first sending component 44 includes a first determination element 52, a second determination element 54 and a sending element 56. The first sending component 44 will be described below.

The first determination element 52 is configured to determine at least one IPv6 transition technology type supported by the remote user; the second determination element 54 is connected to the first determination element 52, and is configured to determine at least one ID corresponding to the at least one IPv6 transition technology type; and the sending element 56 is connected to the second determination element 54, and is configured to send the RADIUS access accepting message encapsulated with the at least one ID to the RADIUS client.

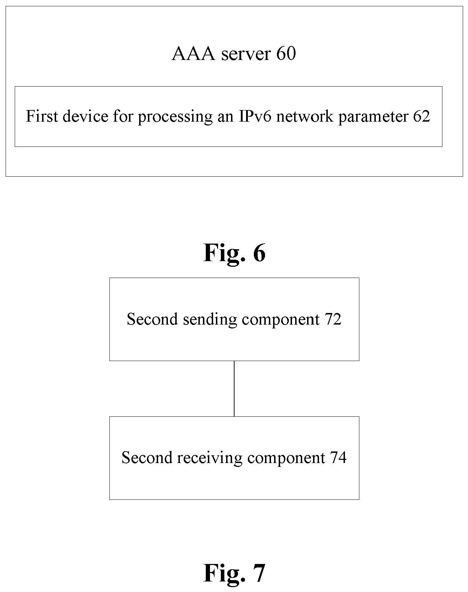

Fig. 6 is a structure block diagram of an AAA server according to an embodiment of the present disclosure, and as shown in Fig. 6, the AAA server 60 includes any abovementioned first device for processing the IPv6 network parameter 62.

Fig. 7 is a structure block diagram of a second device for processing an IPv6 network parameter according to an embodiment of the present disclosure, and as shown in Fig. 7, the device includes a second sending component 72 and a second receiving component 74. The device will be described below.

The second sending component 72 is configured to send an RADIUS access request message from a remote user to an AAA server; and the second receiving component 74 is connected to the second sending component 72, and is configured to receive an RADIUS access accepting message, fed back by the AAA server, carrying information identifying an IPv6 transition technology type supported by the remote user.

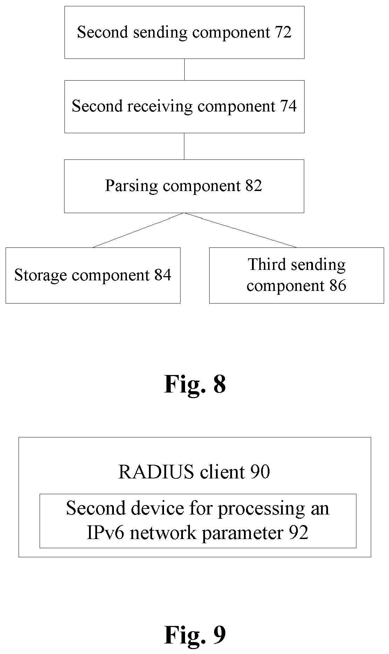

Fig. 8 is an example structure block diagram of the second device for processing the IPv6 network parameter according to an embodiment of the present disclosure, and as shown in Fig. 8, the device further, besides all the structures shown in Fig. 7, includes: a parsing component 82, a storage component 84 and/or a third sending component 86. The device will be described below.

The parsing component 82 is configured to parse at least one IPv6 transition technology type corresponding to at least one ID in the RADIUS access accepting message when the IPv6 transition technology type supported by the remote user is identified by an ID; the storage component 84 is connected to the parsing component 82, and is configured to store a corresponding relationship between at least one ID and remote user; and/or, the third sending component 86 is connected to the parsing component 82, and is configured to send the at least one IPv6 transition technology type to the remote user.

Fig. 9 is a structure diagram of an RADIUS client according to an embodiment of the present disclosure, and as shown in Fig. 9, the RADIUS client 90 includes any abovementioned second device for processing the IPv6 network parameter 92.

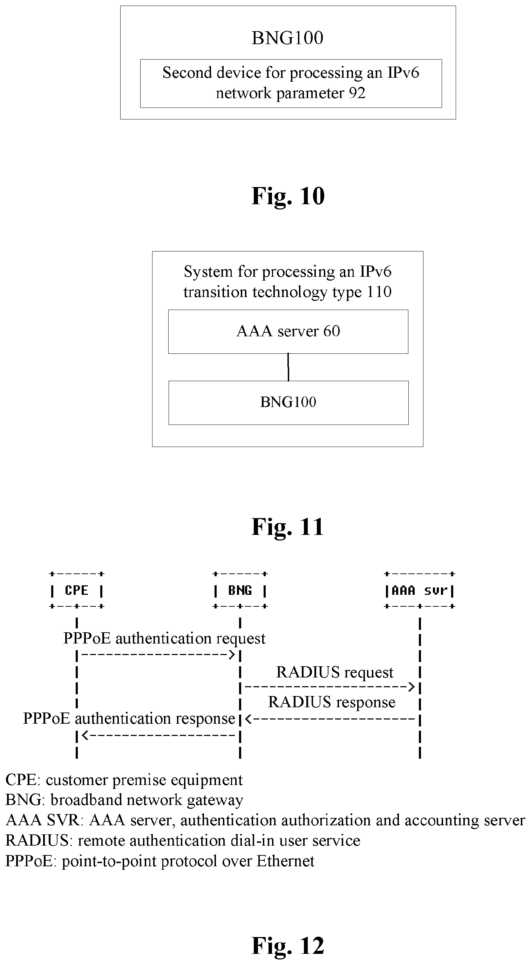

Fig. 10 is a structure diagram of a BNG according to an embodiment of the present disclosure, and as shown in Fig. 10, the BNG 100 includes any abovementioned second device for processing the IPv6 network parameter 92.

Fig. 11 is a structure diagram of a system for processing an IPv6 transition technology type according to an embodiment of the present disclosure, and as shown in Fig. 11, the system for processing the IPv6 transition technology type 110 includes the abovementioned AAA server 60 and BNG 100.

For the problems in the related art, the embodiment provides a method of managing transition technology types of a user on an AAA server. The IPv6 transition technology type is carried in an extended attribute option of an RADIUS protocol, and the carried IPv6 transition technology type is transmitted to the BNG to notify the IPv6 transition technology type supported by the user, thereby overcoming shortcomings of manual configuration for identifying various IPv6 transition technology types of different users on the BNG.

In the embodiment, the IPv6 transition technology type is transmitted through the extended attribute option of the RADIUS protocol. Fig. 12 is a flowchart of RADIUS message interaction according to an embodiment of the present disclosure, and as shown in Fig. 12, an AAA server serves as an RADIUS server and a BNG serves as an RADIUS client. Behaviors of the AAA server and the BNG will be described below.

### Behaviors of the AAA server

The AAA server, as a server capable of processing an access request of a user, provides AAA service. Except a function of an accounting server, functions of the AAA server further include user and accounting information storage, user and accounting strategy management and the like. The AAA server is required to configure, besides information of user accounting, strategies and the like, an IPv6 transition technology type of the user. Multiple IPv6 transition technology types may be included, and for example, may be at least one of: NAT44, DS-Lite, Lightweight 4over6, MAP, NAT64, Public 4over6 and IVI.

The AAA server sets an ID for each abovementioned transition technology to distinguish abovementioned transition technologies. When receiving an RADIUS authentication request message from the RADIUS client, the AAA server encapsulates the transition technology ID in a newly created technology type attribute option for sending to the RADIUS client.

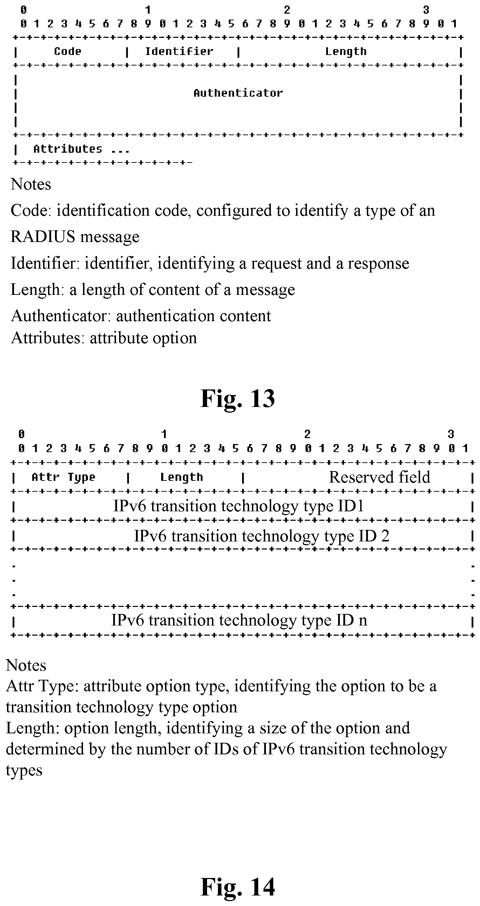

Fig. 13 is a diagram of a format of an RADIUS message according to an embodiment of the present disclosure, and as shown in Fig. 13, an attribute option (Attributes) field may be freely extended according to an application. Fig. 14 is a diagram of a format of an RADIUS message with an extended attribute option containing an ID of an IPv6 transition technology type according to an embodiment of the present disclosure, and as shown in Fig. 14, multiple IDs of IPv6 transition technology types may be contained at one time, that is, a user may simultaneously support multiple IPv6 transition technologies.

### Behaviors of the BNG

The BNG, as the RADIUS client, initiates a RADIUS request message after receiving an authentication dial-in message from a CPE side. After a response message is received from the RADIUS server, i.e. the AAA server, a technology type attribute option contained in the response message is parsed to acquire at least one related ID of at least one transition technology. The BNG associates the acquired the at least one related ID of the at least one transition technology and the CPE side, i.e. a user side, thereby acquiring the at least one IPv6 transition technology type supported by the user.

Through the abovementioned RADIUS message interaction processing, shortcomings of manual configuration for identifying various IPv6 transition technology types of different users on the BNG in the related art are solved. Management on the IPv6 transition technology types of the users is added by virtue of a user management mechanism of the AAA server, and the attribute option of at least one IPv6 transition technology type is added in the RADIUS message to enable the BNG to acquire the at least one IPv6 transition technology type of the user.

Example implementation modes of the present disclosure will be described below with reference to the drawings.

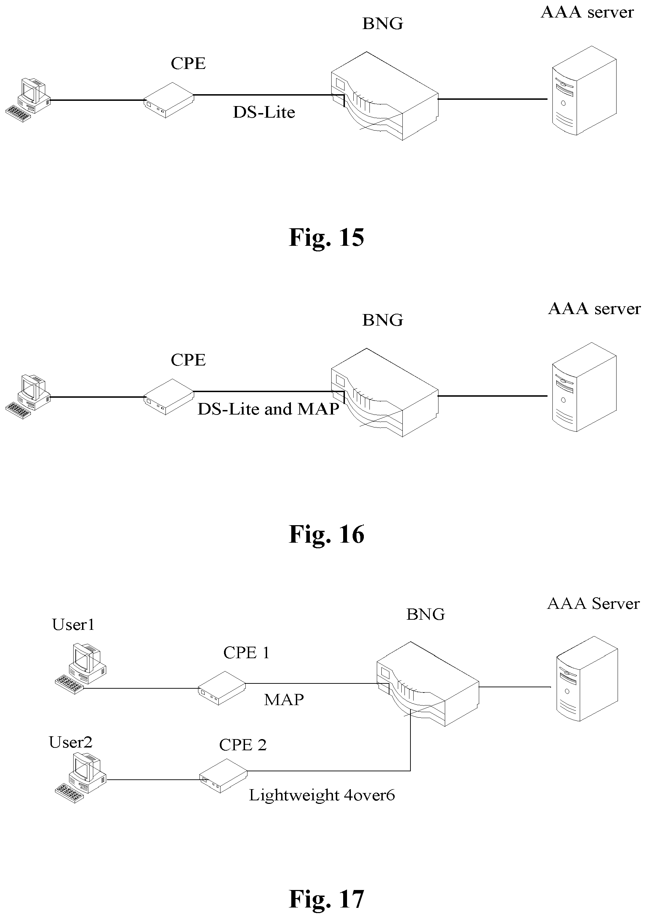

Fig. 15 is a diagram of a DS-Lite transition technology-based deployment scenario according to a first example embodiment of the present disclosure, and based on Fig. 15, IPv6 transition technology deployment includes the following steps:
Step 1502: a user is connected to a BNG and the Internet by virtue of a DS-Lite technology through CPE;
Step 1504: an AAA server manages information of the user, and an operator adds an IPv6 transition technology of which a type is DS-Lite into the information of the user;
Step 1506: the user performs network access authentication by Point-to-Point Protocol over Ethernet (PPPoE) dial-in, and after receiving a related dial-in request, the BNG encapsulates dial-in information in an RADIUS request message, and sends the encapsulated RADIUS request message to the AAA server;
Step 1508: the AAA server receives the RADIUS request message, and when identifying that the IPv6 transition technology type of the user is DS-Lite, fills an ID corresponding to DS-Lite into the attribute option shown in Fig. 14, fills the corresponding type and a corresponding length and appends into an attribute option field of an RADIUS response message; and
Step 1510: the AAA server sends the response message to the BNG, and the BNG receives the message, parses and locally stores a relationship between the IPv6 transition technology type in the attribute option field and the information of the user, and continues the next related flow of the DS-Lite technology of the user.

Fig. 16 is a diagram of a deployment scenario based on simultaneous support of the same user to DS-Lite and MAP transition technologies according to a second example embodiment of the present disclosure, and based on Fig. 16, IPv6 transition technology deployment includes the following steps:
Step 1602: a user is connected to a BNG and the Internet by virtue of DS-Lite and MAP technologies through CPE;
Step 1604: an AAA server manages information of the user, and an operator adds IPv6 transition technologies of which types are DS-Lite and MAP into the information of the user;
Step 1606: the user performs network access authentication by PPPoE dial-in, and after receiving a related dial-in request, the BNG encapsulates dial-in information in an RADIUS request message, and sends the RADIUS request message to the AAA server;
Step 1608: the AAA server receives the RADIUS request message, and when identifying that the IPv6 transition technology types of the user are DS-Lite and MAP, fills IDs corresponding to DS-Lite and MAP into the attribute option shown in Fig. 14, DS-Lite corresponding to IPv6 transition technology type ID1 and MAP corresponding to IPv6 transition technology type ID2, simultaneously fills the corresponding types and corresponding lengths and appends into an attribute option field of an RADIUS response message; and
Step 1610: the AAA server sends the response message to the BNG, and the BNG receives the message, parses and locally stores a relationship between the IPv6 transition technology types in the attribute option field and the information of the user, and continues the next related flow of the DS-Lite and MAP technologies of the user.

Fig. 17 is a diagram of a deployment scenario based on support of user 1 to a MAP transition technology and support of user 2 to a Lightweight 4over6 according to a third example embodiment of the present disclosure, and based on Fig. 17, IPv6 transition technology deployment includes the following steps:
Step 1702: user 1 is connected to a BNG and the Internet by virtue of an MAP technology through CPE1;
Step 1704: user 2 is connected to the BNG and the Internet by virtue of a Lightweight 4over6 technology through CPE2;
Step 1706: an AAA server manages information of the users, and an operator adds an IPv6 transition technology of which a type is MAP into information of user 1, and adds an IPv6 transition technology of which a type is Lightweight 4over6 into information of user 2;
Step 1708: user 1 performs network access authentication by PPPoE dial-in, and after receiving a related dial-in request, the BNG encapsulates dial-in information in a RADIUS request message, and sends the RADIUS request message to the AAA server;
Step 1710: the AAA server receives the RADIUS request message, and when identifying that the IPv6 transition technology type of the user is MAP, fills an ID corresponding to MAP into the attribute option shown in Fig. 14, MAP corresponding to IPv6 transition technology type ID1, simultaneously fills the type and a length and appends into an attribute option field of an RADIUS response message;
Step 1712: the AAA server sends the response message to the BNG, and the BNG receives the message, parses and locally stores a relationship between the IPv6 transition technology type in the attribute option field and the information of the user, and continues the next related flow of the MAP technology of user 1;
Step 1714: user 2 performs network access authentication by PPPoE dial-in, and after receiving a related dial-in request, the BNG encapsulates dial-in information in a RADIUS request message, and sends the RADIUS request message to the AAA server;
Step 1716: the AAA server receives the RADIUS request message, and when identifying that the IPv6 transition technology type of the user is Lightweight 4over6, fills an ID corresponding to Lightweight 4over6 into the attribute option shown in Fig. 14, Lightweight 4over6 corresponding to IPv6 transition technology type ID2, simultaneously fills the type and a length and appends into an attribute option field of an RADIUS response message;
Step 1718: the AAA server sends the response message to the BNG, and the BNG receives the message, parses and locally stores a relationship between the IPv6 transition technology type in the attribute option field and the information of the user, and continues the next related flow of the Lightweight 4over6 technology of user 2.

Obviously, those skilled in the art should know that each component of each component or step of the present disclosure may be implemented by a universal computing device, and the components or steps may be concentrated on a single computing device or distributed on a network formed by a plurality of computing devices, and may optionally be implemented by programmable codes executable for the computing devices, so that the components or steps may be stored in a storage device for execution with the computing devices, the shown or described steps may be executed in sequences different from those described here in some circumstances, or may form each integrated circuit component respectively, or multiple components or steps therein may form a single integrated circuit component for implementation. As a consequence, the present disclosure is not limited to any specific hardware and software combination.

The above is only the example embodiment of the present disclosure and not intended to limit the present disclosure, and for those skilled in the art, the present disclosure may have various modifications and variations. Any modifications, equivalent replacements, improvements and the like within the spirit and principle of the present disclosure shall fall within the scope of protection of the present disclosure.

### Industrial Applicability

As mentioned above, according to the embodiment and example implementation modes, the problems of complexity in manual configuration, configuration inflexibility and high cost of an IPv6 transition technology type in the related art are solved, and the effects of extending a configuration manner for the IPv6 transition technology type and implementing unified configuration management of a network on IPv6 transition technology types supported by a user are further achieved.

## Claims

1. A method for processing an Internet Protocol version 6, IPv6, network parameter, comprising:
receiving a Remote Authentication Dial-In User Service, RADIUS, access request message sent by an RADIUS client corresponding to a remote user (S202); and
sending an RADIUS access accepting message carrying information identifying an IPv6 transition technology type supported by the remote user to the RADIUS client after the remote user passes authentication according to the RADIUS access request message (S204).

2. The method as claimed in claim 1, wherein sending the RADIUS access accepting message carrying the information identifying the IPv6 transition technology type supported by the remote user to the RADIUS client (S204) comprises:
determining at least one IPv6 transition technology type supported by the remote user;
determining at least one Identifier, ID, corresponding to the at least one IPv6 transition technology type; and
sending the RADIUS access accepting message encapsulated with the at least one ID to the RADIUS client.

3. A method for processing an Internet Protocol version 6, IPv6, network parameter, comprising:
sending a Remote Authentication Dial-In User Service, RADIUS, access request message from a remote user to an Authentication Authorization and Accounting, AAA, server (S302); and
receiving an RADIUS access accepting message, fed back by the AAA server, carrying information identifying an IPv6 transition technology type supported by the remote user (S304).

4. The method as claimed in claim 3, after receiving the RADIUS access accepting message, fed back by the AAA server, carrying the information identifying the IPv6 transition technology type supported by the remote user (S304), further comprising:
parsing at least one IPv6 transition technology type corresponding to at least one Identifier, ID, in the RADIUS access accepting message when the IPv6 transition technology type supported by the remote user is identified by an ID;
storing a corresponding relationship between the at least one ID and the remote user; and/or, sending the at least one IPv6 transition technology type to the remote user.

5. A device for processing an Internet Protocol version 6, IPv6, network parameter (62), comprising:
a first receiving component (42), configured to receive an RADIUS access request message sent by an Remote Authentication Dial-In User Service, RADIUS, client corresponding to a remote user (S202); and
a first sending component (44), configured to send an RADIUS access accepting message carrying information identifying an IPv6 transition technology type supported by the remote user to the RADIUS client after the remote user passes authentication according to the RADIUS access request message (S204).

6. The device (62) as claimed in claim 5, wherein the first sending component (44) comprises:
a first determination element (52), configured to determine at least one IPv6 transition technology type supported by the remote user;
a second determination element (54), configured to determine at least one Identifier, ID, corresponding to the at least one IPv6 transition technology type; and
a sending element (56), configured to send the RADIUS access accepting message encapsulated with the at least one ID to the RADIUS client.

7. An Authentication Authorization and Accounting, AAA, server (60), comprising the device (62) as claimed in any one of claims 5-6.

8. A device for processing an Internet Protocol version 6, IPv6, network parameter (92), comprising:
a second sending component (72), configured to send a Remote Authentication Dial-In User Service, RADIUS, access request message from a remote user to an Authentication Authorization and Accounting, AAA, server (S302); and
a second receiving component (74), configured to receive an RADIUS access accepting message, fed back by the AAA server, carrying information identifying an IPv6 transition technology type supported by the remote user (S304).

9. The device (92) as claimed in claim 8, further comprising:
a parsing component (82), configured to parse at least one IPv6 transition technology type corresponding to at least one Identifier, ID, in the RADIUS access accepting message when the IPv6 transition technology type supported by the remote user is identified by an ID;
a storage component (84), configured to store a corresponding relationship between the at least one ID and the remote user; and/or,
a third sending component (86), configured to send the at least one IPv6 transition technology type to the remote user.

10. A Remote Authentication Dial-In User Service, RADIUS, client (90), comprising the device (92) as claimed in any one of claims 8 to 9.

11. A Broadband Network Gateway, BNG (100), comprising the device (92) as claimed in any one of claims 8-9.

12. A system for processing an Internet Protocol version 6, IPv6, transition technology type (110), comprising the Authentication Authorization and Accounting, AAA, server (60) as claimed in claim 7 and the Broadband Network Gateway, BNG (100), as claimed in claim 11.

## Patentansprüche

1. Verfahren zum Verarbeiten eines Internet Protocol Version 6-, IPv6, Netzwerkparameters, umfassend:
Empfangen einer Remote Authentication Dial-In User Service-, RADIUS, Zugriffsanfragenachricht, die von einem RADIUS-Client gesendet wird, der einem fernen Benutzer entspricht (S202); und
Senden einer RADIUS-Zugriffsbewilligungsnachricht, die Informationen übermittelt, welche einen vom fernen Benutzer unterstützten IPv6-Übergangstechnologietyp identifizieren, an den RADIUS-Client, nachdem der ferne Benutzer Authentifizierung gemäß der RADIUS-Zugriffsanfragenachricht besteht (S204).

2. Verfahren nach Anspruch 1, wobei das Senden der RADIUS-Zugriffsbewilligungsnachricht, die die Informationen übermittelt, welche den vom fernen Benutzer unterstützten IPv6-Übergangstechnologietyp identifizieren, an den RADIUS-Client (S204) umfasst:
Bestimmen von mindestens einem IPv6-Übergangstechnologietyp, der vom fernen Benutzer unterstützt wird;
Bestimmen von mindestens einer Kennung, ID, die dem mindestens einen IPv6-Übergangstechnologietyp entspricht; und
Senden der RADIUS-Zugriffsbewilligungsnachricht in der mindestens einen ID gekapselt an den RADIUS-Client.

3. Verfahren zum Verarbeiten eines Internet Protocol Version 6-, IPv6, Netzwerkparameters, umfassend:
Senden einer Remote Authentication Dial-In User Service-, RADIUS, Zugriffsanfragenachricht von einem fernen Benutzer an einen Authentication Authorization and Accounting-, AAA, Server (S302); und
Empfangen einer vom AAA-Server zurückgegebenen RADIUS-Zugriffsbewilligungsnachricht, die Informationen übermittelt, welche einen vom fernen Benutzer unterstützten IPv6-Übergangstechnologietyp identifizieren (S304).

4. Verfahren nach Anspruch 3, nach dem Empfangen der vom AAA-Server zurückgegebenen RADIUS-Zugriffsbewilligungsnachricht, die die Informationen übermittelt, welche den vom fernen Benutzer unterstützten IPv6-Übergangstechnologietyp identifizieren (S304), weiter umfassend:
Parsen von mindestens einem IPv6-Übergangstechnologietyp, der mindestens einer Kennung, ID, in der RADIUS-Zugriffsbewilligungsnachricht entspricht, wenn der vom fernen Benutzer unterstützte IPv6-Übergangstechnologietyp mit einer ID identifiziert wird;
Speichern einer Entsprechungsbeziehung zwischen der mindestens einen ID und dem fernen Benutzer; und/oder Senden des mindestens einen IPv6-Übergangstechnologietyps an den fernen Benutzer.

5. Vorrichtung zum Verarbeiten eines Internet Protocol Version 6-, IPv6, Netzwerkparameters (62), umfassend:
eine erste Empfangskomponente (42), die dazu konfiguriert ist, eine RADIUS-Zugriffsanfragenachricht zu empfangen, die von einem Remote Authentication Dial-In User Service-, RADIUS, Client gesendet wird, der einem fernen Benutzer entspricht (S202); und
eine erste Sendekomponente (44), die dazu konfiguriert ist, eine RADIUS-Zugriffsbewilligungsnachricht, die Informationen übermittelt, welche einen vom fernen Benutzer unterstützten IPv6-Übergangstechnologietyp identifizieren, an den RADIUS-Client zu senden, nachdem der ferne Benutzer Authentifizierung gemäß der RADIUS-Zugriffsanfragenachricht besteht(S204).

6. Vorrichtung (62) nach Anspruch 5, wobei die erste Sendekomponente (44) umfasst:
ein erstes Bestimmungselement (52), das dazu konfiguriert ist, mindestens einen IPv6-Übergangstechnologietyp zu bestimmen, der vom fernen Benutzer unterstützt wird;
ein zweites Bestimmungselement (54), das dazu konfiguriert ist, mindestens eine Kennung, ID, zu bestimmen, die dem mindestens einen IPv6-Übergangstechnologietyp entspricht; und
ein Sendeelement (56), das dazu konfiguriert ist, die RADIUS-Zugriffsbewilligungsnachricht in der mindestens einen ID gekapselt an den RADIUS-Client zu senden.

7. Authentication Authorization and Accounting-, AAA, Server (60), der die Vorrichtung (62) nach einem der Ansprüche 5 bis 6 umfasst.

8. Vorrichtung zum Verarbeiten eines Internet Protocol Version 6-, IPv6, Netzwerkparameters (92), umfassend:
eine zweite Sendekomponente (72), die dazu konfiguriert ist, eine Remote Authentication Dial-In User Service, RADIUS, Zugriffsanfragenachricht von einem fernen Benutzer an einen Authentication Authorization and Accounting-, AAA, Server zu senden (S302); und
eine zweite Empfangskomponente (74), die dazu konfiguriert ist, eine vom AAA-Server zurückgegebene RADIUS-Zugriffsbewilligungsnachricht zu empfangen, welche Informationen übermittelt, die einen vom fernen Benutzer unterstützten IPv6-Übergangstechnologietyp identifizieren (S304).

9. Vorrichtung (92) nach Anspruch 8, weiter umfassend:
eine Parsing-Komponente (82), die dazu konfiguriert ist, mindestens einen IPv6-Übergangstechnologietyp, der mindestens einer Kennung, ID, in der RADIUS-Zugriffsbewilligungsnachricht entspricht, zu parsen, wenn der vom fernen Benutzer unterstützte IPv6-Übergangstechnologietyp mit einer ID identifiziert wird;
eine Speicherkomponente (84), die dazu konfiguriert ist, eine Entsprechungsbeziehung zwischen der mindestens einen ID und dem fernen Benutzer zu speichern; und/oder
eine dritte Sendekomponente (86), die dazu konfiguriert ist, den mindestens einen IPv6-Übergangstechnologietyp an den fernen Benutzer zu senden.

10. Remote Authentication Dial-In User Service-, RADIUS, Client (90), der die Vorrichtung (92) nach einem der Ansprüche 8 bis 9 umfasst.

11. Broadband Network Gateway, BNG (100), das die Vorrichtung (92) nach einem der Ansprüche 8 bis 9 umfasst.

12. System zum Verarbeiten eines Internet Protocol Version 6-, IPv6, Übergangstechnologietyps (110), das den Authentication Authorization and Accounting-, AAA, Server (60) nach Anspruch 7 und das Broadband Network Gateway, BNG (100) nach Anspruch 11 umfasst.

## Revendications

1. Procédé de traitement d'un paramètre de réseau de protocole Internet version 6, IPv6, comprenant :
la réception d'un message de demande d'accès au service d'authentification et de connexion d'utilisateur à distance, RADIUS, envoyé par un client de RADIUS correspondant à un utilisateur distant (S202) ; et
l'envoi d'un message d'acceptation d'accès au RADIUS transportant des informations identifiant une technologie de transition de type IPv6 prise en charge par l'utilisateur distant au client de RADIUS après réussite de l'authentification de l'utilisateur distant conformément au message de demande d'accès au RADIUS (S204) .

2. Procédé selon la revendication 1, dans lequel l'envoi du message d'acceptation d'accès au RADIUS transportant les informations identifiant la technologie de transition de type IPv6 prise en charge par l'utilisateur distant au client de RADIUS (S204) comprend :
la détermination d'au moins une technologie de transition de type IPv6 prise en charge par l'utilisateur distant ;
la détermination d'au moins un identifiant, ID, correspondant à l'au moins une technologie de transition de type IPv6 ; et
l'envoi du message d'acceptation d'accès au RADIUS encapsulé avec l'au moins un ID au client de RADIUS.

3. Procédé de traitement d'un paramètre de réseau de protocole Internet version 6, IPv6, comprenant :
l'envoi d'un message de demande d'accès au service d'authentification et de connexion d'utilisateur à distance, RADIUS, provenant d'un utilisateur distant à un serveur d'authentification, d'autorisation et de comptabilité, AAA, (S302) ; et
la réception d'un message d'acceptation d'accès au RADIUS, renvoyé par le serveur AAA, transportant des informations identifiant une technologie de transition de type IPv6 prise en charge par l'utilisateur distant (S304) .

4. Procédé selon la revendication 3, après réception du message d'acceptation d'accès au RADIUS, renvoyé par le serveur AAA, transportant les informations identifiant la technologie de transition de type IPv6 prise en charge par l'utilisateur distant (S304), comprenant en outre :
l'analyse d'au moins une technologie de transition de type IPv6 correspondant à au moins un identifiant, ID, dans le message d'acceptation d'accès au RADIUS lorsque la technologie de transition de type IPv6 prise en charge par l'utilisateur distant est identifiée par un ID ;
le stockage d'une relation correspondante entre l'au moins un ID et l'utilisateur distant ; et/ou l'envoi de l'au moins une technologie de transition de type IPv6 à l'utilisateur distant.

5. Dispositif de traitement d'un paramètre de réseau de protocole Internet version 6, IPv6, (62), comprenant :
un premier composant de réception (42), configuré pour recevoir un message de demande d'accès au RADIUS envoyé par un client du service d'authentification et de connexion d'utilisateur à distance, RADIUS, correspondant à un utilisateur distant (S202) ; et
un premier composant d'envoi (44), configuré pour envoyer un message d'acceptation d'accès au RADIUS transportant des informations identifiant une technologie de transition de type IPv6 prise en charge par l'utilisateur distant au client de RADIUS après réussite de l'authentification de l'utilisateur distant conformément au message de demande d'accès au RADIUS (S204) .

6. Dispositif (62) selon la revendication 5, dans lequel le premier composant d'envoi (44) comprend :
un premier élément de détermination (52), configuré pour déterminer au moins une technologie de transition de type IPv6 prise en charge par l'utilisateur distant ;
un second élément de détermination (54), configuré pour déterminer au moins un identifiant, ID, correspondant à l'au moins une technologie de transition de type IPv6 ; et
un élément d'envoi (56), configuré pour envoyer le message d'acceptation d'accès au RADIUS encapsulé avec l'au moins un ID au client de RADIUS.

7. Serveur d'authentification, d'autorisation et de comptabilité, AAA, (60), comprenant le dispositif (62) selon l'une quelconque des revendications 5 à 6.

8. Dispositif de traitement d'un paramètre de réseau de protocole Internet version 6, IPv6, (92), comprenant :
un deuxième composant d'envoi (72), configuré pour envoyer un message de demande d'accès au service d'authentification et de connexion d'utilisateur à distance, RADIUS, provenant d'un utilisateur distant à un serveur d'authentification, d'autorisation et de comptabilité, AAA, (S302) ; et
un second composant de réception (74), configuré pour recevoir un message d'acceptation d'accès au RADIUS, renvoyé par le serveur AAA, transportant des informations identifiant une technologie de transition de type IPv6 prise en charge par l'utilisateur distant (S304) .

9. Dispositif (92) selon la revendication 8, comprenant en outre :
un composant d'analyse (82), configuré pour analyser au moins une technologie de transition de type IPv6 correspondant à au moins un identifiant, ID, dans le message d'acceptation d'accès au RADIUS lorsque la technologie de transition de type IPv6 prise en charge par l'utilisateur distant est identifiée par un ID ;
un composant de stockage (84), configuré pour stocker une relation correspondante entre l'au moins un ID et l'utilisateur distant ; et/ou
un troisième composant d'envoi (86), configuré pour envoyer l'au moins une technologie de transition de type IPv6 à l'utilisateur distant.

10. Client du service d'authentification et de connexion d'utilisateur à distance, RADIUS, (90), comprenant le dispositif (92) selon l'une quelconque des revendications 8 à 9.

11. Passerelle de réseau à large bande, BNG (100), comprenant le dispositif (92) selon l'une quelconque des revendications 8 à 9.

12. Système de traitement d'une technologie de transition de type réseau de protocole Internet version 6, IPv6 (110), comprenant le serveur d'authentification, d'autorisation et de comptabilité, AAA, (60) selon la revendication 7 et la passerelle de réseau à large bande, BNG (100), selon la revendication 11.
